# EUROPÄISCHE PATENTSCHRIFT

(11) **EP 2 437 589 B1**
(45) Veröffentlichungstag und Bekanntmachung des Hinweises auf die Patenterteilung: **21.08.2013**
(21) Anmeldenummer: 10721102.1
(22) Anmeldetag: 25.05.2010
(51) Int. Cl.: A01G 25/16, A01G 25/09, A01G 29/00

(54) **VERFAHREN UND VORRICHTUNG ZUR BEDARFSGERECHTEN BEWÄSSERUNG EINES BODENS**
PROCESS AND APPARATUS FOR ADEQUATELY IRRIGATING SOIL
PROCÉDÉ ET DISPOSITIF POUR L'ARROSAGE À LA DEMANDE D'UN SOL

(30) Priorität: 03.06.2009 CH 8422009
(43) Veröffentlichungstag der Anmeldung: 11.04.2012
(73) Patentinhaber: PlantCare AG, 8332 Russikon (CH)
(72) Erfinder: SCHMIDT, Walter, CH-8332 Russikon (CH); TOPRAK, Yücel, CH-8046 Zürich (CH)
(74) Vertreter: Frei Patent Attorneys
(86) Internationale Anmeldenummer: PCT/CH2010/000135
(87) Internationale Veröffentlichungsnummer: WO 2010/139079

(56) Entgegenhaltungen:
- WO-A-00/15987
- JP-A- 2004 012 452
- US-A- 5 927 603
- US-A1- 2003 024 155
- US-A1- 2008 046 130

## Beschreibung

Die Erfindung betrifft eine Vorrichtung und ein Verfahren zur bedarfsgerechten Bewässerung von Bodenflächen gemäss dem Oberbegriff der unabhängigen Patentansprüche.

Die bedarfsgerechte Bewässerung von Bodenflächen, insbesondere Rasen- oder Agrarflächen gewinnt immer grössere Bedeutung, da der Wasserbedarf - vor allem in kritischen Klimazonen - ein sehr wichtiger ökonomischer Faktor darstellt. Es wurden deshalb eine Reihe von Verfahren entwickelt, um den Wassereintrag dem Bedarf der Pflanzen anzupassen. Neben der Auswertung von Wetterdaten und daraus gewonnenen Vorhersagen zur Bewässerungsdauer, sind auch Bodenfeuchtesensoren bekannt, die die Bodenfeuchte elektronisch messen und über einen Regelkreis den Bewässerungszeitpunkt und/oder die Bewässerungsdauer bestimmen, z. B. wie in WO 2007/059 636 beschrieben.

Mit solch stationären Sensoren wird punktuell gemessen. Entsprechend werden mit diesen Verfahren umso bessere Resultate erzielt, je uniformer die zu bewässernden Böden sind und je gleichmässiger eine Besonnung ist. Dies ist zum Beispiel bei nichtüberdachten Sportplätzen der Fall. In anderen Anwendungen, wie naturbelassenen Böden in Gärten, Parkanlagen oder agrartechnisch genutzten Böden ist diese Voraussetzung nicht gegeben. Die Zusammensetzung der Böden kann sehr stark variieren und damit auch die WasserspeicherFähigkeit (Feldkapazität). Auch die Geländeform spielt eine wesentliche Rolle, da an Hängen das Wasser schneller abfliessen kann als in flachen Mulden. Zudem gibt es Bereiche die beispielsweise durch Bauten oder Bäume abgeschattet sein können, während andere Bereiche der vollen Sonne ausgesetzt sind. In solchen Fällen müssen die Flächen eingeteilt und eigene Bodenfeuchtesensor zugeteilt werden, so dass die Bewässerung entsprechend den Bedürfnissen dieser Zonen, gesteuert werden kann. Damit kann bereits eine Reduktion des Wasserverbrauches bis zu 30% erreicht werden.

Ein weiterer Einflussfaktor zur Minimierung der Wassermenge ist die durch eine Bewässerungsvorrichtung, wie beispielsweise einen Sprinkler, erreichbare Uniformität der Wasserverteilung. Diese ist typischerweise im Bereich von +/- 50%, d.h. es muss immer wesentlich länger bewässert werden, um auch den unterversorgten Flächen genügend Wasser zuzuteilen. Damit werden aber die anderen überstrichenen Flächen überversorgt, d.h. es wird Wasser verschwendet. Je grösser die vom Sprinkler überdeckte Fläche sein soll, desto schlechter wird auch die Uniformität des Wassereintrages ausfallen. Dazu kommt der Einfluss von Wind, der das Wasser stark verblasen kann, sowie Sonneneinstrahlung und Wärme, bei denen ein Teil des Wassers verdunstet bevor es den Boden erreicht.

Beispielsweise Golfanlagen haben einen sehr hohen Wasserverbrauch und entsprechend hohe Wasserkosten. Man spricht von jährlichen verbrauchten Wassermengen zwischen 100'000 bis 300'000 m3 Wasser. Zudem sind Investitionskosten und Wartungskosten für die Bewässerungsinfrastruktur sehr hoch. Der Bodenaufbau - da künstlich angelegt - ist in der Regel sehr homogen. Doch auch bei Golfplätzen gibt es abgeschattete Bereiche oder Hanglagen bei denen das Wasser rasch abfliessen kann.

Aus den genannten Gründen wäre es wünschenswert eine Bewässerungstechnik einzusetzen die in jedem beliebigen Punkt der zu bewässernden Fläche den aktuellen Wasserbedarf ermitteln könnte. Zudem besteht die Forderung nach einer Wasserverteiltechnik, die einerseits eine gleichmässige Verteilung gewährleistet und gleichzeitig unnötige Wassergaben oder -verdunstung verhindert. Ausserdem sollte eine solche Technologie, sowohl was das Investment betrifft, als auch im Betrieb und Unterhalt möglichst kostengünstig sein.

Aufgabe der Erfindung ist es, eine Vorrichtung und ein Verfahren zu schaffen, mit welchen oben genannte Ziele erreicht werden können.

Diese Aufgabe wird durch die Vorrichtung und das Verfahren gelöst wie sie in den unabhängigen Patentansprüchen beschrieben sind.

Die Erfindung löst die gestellte Aufgabe insbesondere bei Anwendungen im Bereich der Rasenbewässerung und Bewässerung von homogen bepflanzten Flächen auf sehr einfache Weise, ist jedoch nicht auf die Anwendung bei solchen Flächen eingeschränkt.

Eine oberflächliche Abtastung des Bodens erlaubt keine Aussage über die Bodenfeuchte selber. Um dies zu erreichen müssen andere Verfahren eingesetzt werden, wobei bislang im Bereich der Bewässerung von Bodenflächen meistens stationäre, zumindest teilweise im Boden eingebrachte Messstationen verwendet wurden.

Beispielsweise in der Schrift US5,927,603 wird ein Verfahren beschrieben, das auf einer fahrbaren Bewässerungseinrichtung eine passiv arbeitende Videokamera einsetzt um den Boden flächig mit Hilfe von Infrarot- oder Ultraviolettstrahlung abzubilden.

Dieses optische Verfahren wird verwendet um den Befall der Pflanzen durch Schädlinge zu detektieren oder auch um abnorme Blattzustände und abgefallene Blätter festzustellen. Die Messung der Bodenfeuchte wird nach wie vor durch stationäre, im Boden eingebrachte Bodenfeuchtesensoren bewerkstelligt.

In der Schrift WO 00/15987 wird ein Bewässerungssystem beschrieben das ebenfalls eine Reihe von Sensoren aufweist. Es werden Sensoren auf der Basis von reflektierter oder ausgestrahlter elektromagnetischer Strahlung verwendet, wobei Infrarot-Thermometer, einschliesslich Infrarot - Thermoelemente (IRTs), als Sensortypen genannt sind. Diese Sensoren sind in einem relativ grossen Abstand zu Bodenfläche angeordnet, damit ein hinreichend grosser Bereich abgetastet werden kann. WO 00/15987 offenbart jedoch keine Bodenfeuchtesensoren oder Angaben über Bewässerung mittels Messung der Bodenfeuchte.

In der Schrift US 2008/046130 A1 wird ein mobiles Bewässerungssystem beschrieben, mit einem mobilen Arm um Bodenproben zu entnehmen, um u.a. die Bodenfeuchte zu messen.

Um eine lokale Messung der Bodenfeuchte an jedem beliebigen Ort durchzuführen, wird in der erfindungsgemässen Vorrichtung und dem Verfahren ein mobiler Sensor zur Messung der Bodenfeuchte verwendet, der keinen oder nur geringen Kontakt zum Boden aufweist und daher beweglich und nicht nur stationär eingesetzt werden kann.

Mittels speziell gestalteten Mikrowellensendern, die im Bereich von 868 MHz bis ca. 2.6 GHz strahlen, vorzugsweise bei 2.4GHz, ist es möglich die Bodenfeuchte - abhängig von der abgestrahlten Energie - bis zu einer Tiefe von ca. 1 Meter zu messen. Dabei werden die Wassermoleküle durch das Wechselfeld angeregt zu rotieren, d.h. sie absorbieren Energie, was in einem Mikrowellenofen zur schnellen Erwärmung von wasserhaltigen Speisen ausgenutzt wird. Bei niedriger Energie von einigen Milliwatt bis zu einigen Watt und Messzeiten im Bereich von einigen Millisekunden spielt die Erwärmung keine Rolle. Auch wäre eine minimale Erwärmung in einem Boden vernachlässigbar.

Die elektrischen Gesamtverluste eines Materials setzen sich aus der Summe der dielektrischen Verluste und der Verluste durch Gleichstromleitfähigkeit von Ionen im Boden zusammen. Bei Frequenzen über 2 GHz nimmt die Ionenleitfähigkeit stark ab, so dass praktisch nur noch dielektrische Verluste gemessen werden und beispielsweise der Salzgehalt des Bodens keine Rolle mehr spielt.

Die Eindringtiefe der Mikrowelle im Boden hängt einerseits stark vom Wassergehalt des Erdreiches ab, andererseits aber auch von der Abstrahlenergie und einer gewählten Antennenauslegung. Misst man die abgestrahlte Mikrowellenenergie und gleichzeitig die vom Boden reflektierte Energie, so lässt sich aus dem Verhältnis beider ein Mass für die Feuchte ableiten. Feuchter Boden absorbiert einen Grossteil der Energie und es wird nur wenig reflektiert.

Eine reflektierte Welle weist auch gegenüber einer eingestrahlten Welle eine Phasenverschiebung auf, die eine Aussage über die vertikale Feuchtestruktur des Bodens ermöglicht.

Ein Mikrowellensensor wird zur Messung vorzugsweise senkrecht über einem Boden plaziert. Der Sensor strahlt und misst gleichzeitig. Es ist jedoch auch möglich einen, eventuell zusätzlichen, Mikrowellendetektor beabstandet, gegebenenfalls in einem Winkel zu einem Mikrowellensender, anzubringen. Auf diese Art können Feuchte-Tiefenprofile des Bodens erstellt werden.

Ist ein Boden über die zu messende Fläche in seiner Art konstant, d.h. der mineralische Aufbau und dessen Schichtung, so kann reflektiv mit einer konstanten Abstrahlenergie gearbeitet werden. Die Messung zeigt dann einen Mittelwert der Bodenfeuchte bis zu einer durch die gewählte Energie bestimmten Eindringtiefe. Die im oberen Bereich liegenden Schichten werden dabei vorzugsweise stärker gewichtet.

Als Beispiel: Hat es kurz geregnet und der Boden wurde nur wenige cm tief durchfeuchtet, so zeigt das Messgerät eine hohe Feuchte an, da praktisch alle Energie bereits im oberen Bodenbereich absorbiert wird. Durch die Wahl der Abstrahlenergie kann jedoch eine Eindringtiefe der Mikrowellen kontinuierlich variiert werden, was neue Aussagen über die Bodenbeschaffenheit zulässt.

Es ist auch möglich mit mehreren, beispielsweise zwei Sensoren unterschiedlicher Antennenauslegung zu arbeiten. Ein Sensor misst beispielsweise in einem oberen Bodenbereich, z.B. 0 bis 5 cm, ein weiterer Sensor in einem unteren Bodenbereich, z.B. 10 bis 20 cm. Damit kann die vertikale Feuchteverteilung ebenfalls quantitativ bestimmt werden. Durch die Verwendung mehrerer Sensoren mit graduell abgestuften Antennenauslegungen kann, falls gewünscht, eine Messung noch feiner aufgelöst werden.

Der Vorteil des genannten Verfahrens liegt insbesondere darin, dass eine Messzeit sehr kurz ist. Zudem wird das zu messende Material kaum oder nicht berührt und die Messung kann daher kontinuierlich und automatisch vorgenommen werden. Des weiteren ist das Verfahren sehr sensibel. Selbst geringste Änderungen des Wassergehalts sind messbar. Die Flexibilität des Verfahrens lässt zudem auch eine spontane Änderung eines Messmodus zu, z.B. Änderung der Anstrahlenergie.

Es kann nun ein Bewässerungssystem zur bedarfsgerechten Bewässerung eines Bodens hergestellt werden, in dem eine mobile Bewässerungseinheit und eine mobile Mikrowellen-Messeinheit zur Bestimmung des Wassergehalts des Bodens entlang eines Messpfads, kombiniert werden. Dabei wird entsprechend einem gemessenen Wassergehalt der Boden entlang des Messpfads über die Bewässerungseinheit bewässert. Dies wird bevorzugt über eine Steuereinheit geregelt, welche gleichzeitig mit einer Steuereinheit für eine Bewegung des Systems kombiniert sein kann.

Die wesentlichen Vorteile des Verfahrens und der Vorrichtung beruhen darauf, dass das System auf dem aktuellen Wasserbedarf der Pflanzen basiert. Sie bieten dadurch die Möglichkeit, Flächen mit unterschiedlichem Wasserbedarf optimal zu versorgen. Gleichzeitig kann eine maximale Wassereinsparung erzielt werden. Zudem können mit diesem System herkömmliche Bewässerungsmethoden optimiert und vereinfacht werden. Beispielsweise können Wetterstationen oder Bodenfeuchtesensoren, wobei für letztgenannte ein guter und konstanter Bodenkontakt unerlässlich ist, eliminiert werden. Auch auf die Verlegung von Bewässerungsrohre oder auf die Montage von Magnetventile kann in bevorzugten Ausführungsformen verzichtet werden.

Beispielsweise müssen Golfplätze grossflächig mit einer Drainage versehen werden, um überschüssiges Wasser möglichst aufzufangen, zu reinigen und wieder der Bewässerung zuzuführen. Durch das erfindungsgemässe Verfahren werden somit nicht nur Investitionskosten, sondern auch Unterhaltskosten massiv reduziert. Auch wird ein Bearbeiten einer Bodenfläche oft durch auf oder im Boden eingebrachte Rohre, Schläuche oder Sensoren behindert, welche durch die erfindungsgemässe Vorrichtung und das Verfahren entsprechend erleichtert werden.

Wird zudem nur eine relativ kleine Bodenfläche von einer Bewässerungseinheit abgedeckt, so ist die Uniformität des Wassereintrages sehr hoch und es wird kein Wasser durch übermässiges Bewässern vergeudet. Ein Mess- und Bewässerungspfad kann sich auch beliebig überschneiden, da eine Überkreuzung einer bereits bewässerten Bahn durch eine Feuchtemesseinheit erkannt und entsprechend nicht noch einmal bewässert wird.

In einer bevorzugten Ausführungsform der Erfindung weist die mobile Bewässerungsvorrichtung im wesentlichen einen fahrbaren Wassertank auf, an dessen Front-Unterseite ein entsprechendes Mikrowellen-Feuchtemessgerät angebracht ist. Die Messung des Wassergehalts des Rasens kann kontinuierlich oder quasi-kontinuierlich während der Fahrt erfolgen. Fährt der Tankwagen über einen Bereich mit Wasserbedarf, so wird automatisch die am Wagen integrierte Bewässerungseinheit aktiviert und Wasser gegossen. In Bereichen ohne Wasserbedarf wird kein Wasser gegeben. Die Wassermenge pro Zeiteinheit - beispielsweise durch veränderlichen Wasserdruck variierbar - oder die Dauer einer Bewässerung am selben Ort, kann vom Mass des Wassermangels abhängig gemacht werden.

Das mobile Bewässerungssystem oder der Tankwagen kann manuell gesteuert werden, oder beispielsweise analog zu den bekannten, mittels Induktionsschlaufen gesteuerten automatischen Rasenmähern selbstbestimmt eine begrünte Fläche abfahren, mittels gespeicherten Flächendaten diese abfahren oder auch mit Führungsseilen oder -stangen einen vorgegebenen Pfad entlang geführt werden.

Ist ein Wassertank leer, ein vorgegebenes Minimum oder allenfalls auch eine Zeitlimite erreicht, fährt ein Tankwagen vorzugsweise automatisch zu einer Nachtankstation (Dockingstation). Dort wird eine Stromversorgung, beispielsweise Batterien, bei Bedarf aufgeladen und bei einem vorhandenen Tank dieser vorzugsweise automatisch aufgefüllt.

Bei grossen Flächen, wie Golfplätzen etc. können auch mehrere Wagen oder Bewässerungssysteme gleichzeitig zum Einsatz kommen. Diese können beispielsweise durch ein integriertes GPS-System so programmiert sein, dass sie Sperrflächen, wie Bäume, Bunker etc. automatisch umfahren. Auch können Abstandsensoren verwendet werden, die Hindernisse erkennen, so dass ein Wagen diesen Ausweichen bzw. diese umfahren kann. Damit kann eine Bewässerungsvorrichtung sowohl gezielt als auch ,ziellos' eine Fläche abfahren, wobei eine Grenze der zu bewässernden Fläche mittels Induktionsschlaufen gekennzeichnet werden kann.

Eine elektronische Einrichtung zur Bestimmung eines Messpfades ist vorzugsweise so ausgestaltet, dass sie eine automatische Lokalisierung einer mobilen Messvorrichtung zulässt.

Wird eine mobile Bewässerungsvorrichtung nicht mit einem Tank ausgerüstet, ist beispielsweise eine Kombination mit einem mobilen Bewässerungssystem wie aus EP 1 849 354 bekannt möglich. Dort sind mehrere Hydranten in typischerweise regelmässigen Abständen entlang eines vorgegebenen Pfades montiert. Der Wagen ist im wesentlichen ein mobiles Bewässerungssystem, welches den vordefinierten Pfad abfährt. Der Wagen ist dabei mechanisch oder elektronisch geführt und dockt jeweils an die vorhandenen Hydranten an. Der Vorteil einer solchen Kombination ist, dass eine Fläche nicht beliebig mit der bekannten Über- und/oder Unterbewässerung versorgt, sondern bedarfsgerecht, entsprechend den gemessenen Feuchtedaten, bewässert wird.

Es ist auch möglich, das erfindungsgemässe Verfahren bei zeilenförmig angeordneten Pflanzen, wie Rebstöcken, Baumreihen in Baumschulen etc. einzusetzen. Da insbesondere der genannte Mikrowellensensor die Feuchte bis zu einer Tiefe von einem Meter zu messen vermag, kann man sich ein Bewässerungssystem vorstellen, dass schrittweise von Pflanze zu Pflanze, z.B, Rebstöcke, vorrückt, die Feuchte misst und, entsprechend dem Bedarf der Pflanze, Wasser appliziert.

Bei Bedarf kann eine genaue Positionierung des Systems zur Pflanze, beispielsweise durch passiv arbeitende RFID - Chips oder auch optische Reflektoren, die an den Pflanzen oder Pflanzenhalterungen befestigt sind, erreicht werden.

Ein Nachteil bekannter Sprinklersysteme ist, dass Wasser auf eine Rasenoberfläche aufgesprüht wird. Dabei verbleibt ein Grossteil des Wassers auf dem Rasen und nur ein Teil sickert in das Erdreich ein. Dadurch verdunstet ein grosser Teil des den Wurzeln zugedachten Wassers nutzlos. Um diesen Nachteil zu vermeiden, wurde für eine weitere Ausführungsform der Erfindung, eine neuartige Methode der Wasserzufuhr entwickelt. Darin wird Wasser direkt in den Boden eingebracht. Dies geschieht bevorzugt mittels Hochdruck und/oder in den Boden eindringender Injektionsspitzen.

Die Verdunstung des an der Oberfläche verbleibenden Wassers wird dank dieser Methode praktisch auf Null reduziert. Zudem wird die für eine sichere Versorgung der Wurzeln notwendige Menge Wasser ebenfalls reduziert. Das normalerweise von oben einsickernde Wasser wird zu einem grossen Teil in den obersten Erdschichten absorbiert. Diese Schicht wird aber auch durch Sonneneinstrahlung am schnellsten und meisten erwärmt, so dass dieses Wasser rasch wieder verdunstet. Mit der vorliegenden Methode ist es möglich Wasser in tiefere Bereiche, direkt zu den Wurzelbereichen, zu bringen.

In der Schrift JP8116708 ist ein Verfahren beschrieben, bei dem Wasser durch Anwendung von Hochdruck in einen Rasen eingeschossen wird. Der Vorteil dieses Verfahrens liegt im Umstand, dass das Wasser nicht auf die Rasenoberfläche gesprüht, sondern in den Boden eingeschossen wird. Dadurch kann - bedingt durch die wesentlich geringere Verdunstung - Wasser gespart werden.

Das beschriebene Verfahren hat aber wesentliche Nachteile. Einerseits muss ein hoher Wasserdruck von ca. 50-100 bar erzeugt werden, was nicht nur Energie benötigt, sondern auch aufwendige d.h. teure Pumpen und Installationen erforderlich macht. Ausserdem wird der Rasen stark belastet, da der Hochdruck-Wasserstrahl im Wurzelbereich Schäden verursacht. Daher hat sich dieses Verfahren nicht durchgesetzt.

Um die Vorteile einer Hochdruck-Injektion von Wasser zu Nutzen, dessen Nachteile jedoch zu vermeiden, wurde nun ein Verfahren entwickelt, das mit wesentlich niedrigerem Wasserdruck, typischerweise zwischen 2- 40 bar, vorzugsweise zwischen 2-30 oder 5-20 bar, z.B. 5-15 bar arbeitet und demnach auch wesentlich geringere Anlagenkosten aufweist.

Wird der Druck optimal eingestellt, kann das Wasser in eine bestimmte, gewünschte Tiefe appliziert werden. Dabei kann das Wasser kontinuierlich, oder aber auch gepulst "verschossen" werden. Zudem ist es vorteilhaft eine Anordnung von Düsen zu verwenden, die eine grössere Fläche abzudecken vermögen. Auch ein Oszillieren eines Düsenarrays ist möglich.

Der Wasserstrahl erzeugt je nach Bodenbeschaffenheit und Betrieb der Wasserspitze bzw. des mobilen Bewässerungssystems, kleine Schlitze oder Löcher. Diese bewirken gleichzeitig eine bessere Durchlüftung des Rasens. Auf ein separates Vertikutieren eines Rasen oder einer anderen bepflanzten Fläche zum Belüften derselben, kann somit gegebenenfalls verzichtet werden.

In einer bevorzugten Ausführungsform, wird Wasser mittels Injektionsspitzen appliziert. Eine Spitze dringt dabei mehr oder weniger in den Boden ein, so dass Wasser direkt in den Boden eingebracht wird. Damit kann Wasser einerseits direkt in unterschiedliche Tiefen eingebracht werden und andererseits kann damit der Wasserdruck reduziert werden.

Wird das Bewässerungssystem auf Flächen eingesetzt, bei denen keine 100%-ige Bedeckung des Bodens vorliegt, so kann durch eine einfache Farberkennungseinrichtung, z. B. Farbsensor, automatisch festgestellt werden, ob man sich auf einer begrünten oder nackten Fläche befindet. Diese Information kann zur Steuerung der Bewässerung verwendet werden.

Weiters ist es möglich, das Bewässerungssystem, insbesondere den Tankwagen, mit einem Rasenmäher zu kombinieren.

In einer weiteren Ausführungsform der Erfindung weist der vorzugsweise automatisch fahrende Wagen einen oder mehrere Feuchtemesssensoren, aber vorzugsweise keine Bewässerungseinrichtung auf. Der Wagen fährt entweder auf vorgegebenen Bahnen oder "ziellos" eine zu bewässernde Fläche ab und misst dabei kontinuierlich oder in vorzugsweise regelmässigen Abständen die Bodenfeuchte. Diese wird dann Positionskoordinaten zugeordnet und in einer Feuchte-Landkarte festgehalten. Auf Grund dieser Feuchtekarte kann dann entschieden werden -mittels mobilem oder auch festinstalliertem Bewässerungssystem-, in welchen Bereichen bewässert wird und in welchen Bereichen noch zugewartet werden kann.

Bevorzugte Ausführungsform des Verfahrens und Vorrichtung sind in den folgenden Figuren beschrieben. Dabei zeigt:
Fig. 1a einen Mikrowellensender zur Messung von Bodenfeuchte;
Fig. 1b Kurvenverläufe bei unterschiedlicher Bodenbeschaffenheit;
Fig. 2a Anordnung von Mikrowellenquelle und Detektor;
Fig. 2b Sensoren mit unterschiedlichen Messtiefen;
Fig. 3 ein mobiler Bewässerungswagen mit Feuchtesensor und Tank;
Fig. 4 ein Anwendungsverfahren mit einem Bewässerungswagen;
Fig. 5a-c Verfahren zur Hochdruckinjektion von Wasser.

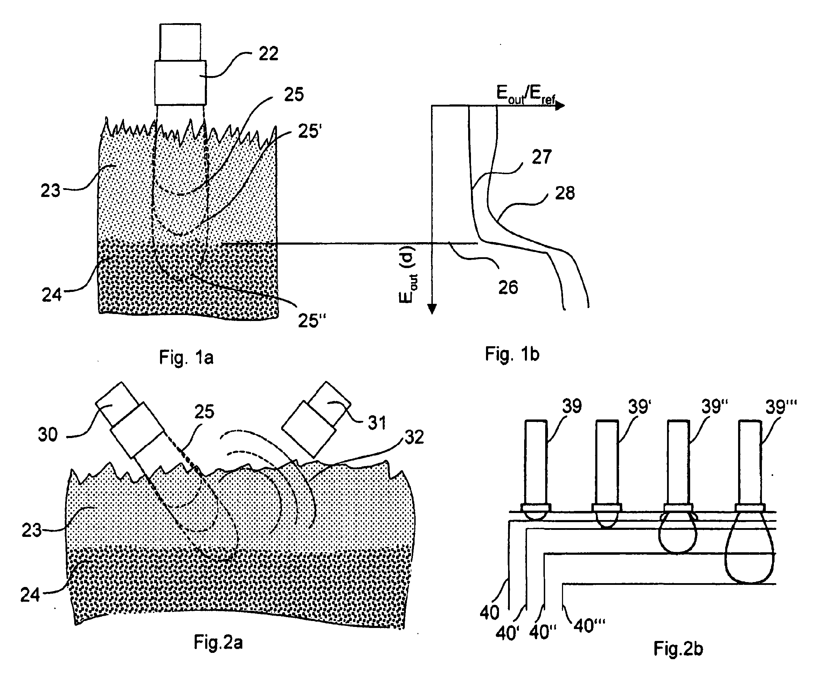

In Figur 1a ist schematisch ein Mikrowellensender 22 dargestellt, der kontaktlos über einem Boden mit einer trockenen Schicht 23 und einer darunter liegenden feuchteren Schicht 24 angeordnet ist. Drei Kurven 25, 25' und 25" bezeichnen bei drei verschiedenen Strahlungsenergien ausgebildete Eindringbereiche der Mikrowellenstrahlung. Bei geringerer Energie dringt die Strahlung naturgemäss weniger tief ein als bei höherer Abstrahlenergie der Quelle.

Da Mikrowellenstrahlung in den feuchteren Schichten stärker absorbiert wird, wird entsprechend auch weniger Strahlung reflektiert. In **Figur 1b** sind zwei Kurven 27,28 schematisch dargestellt, welche das Verhältnis von abgestrahlter Energie zu reflektierter Energie (Eout/Eref), gegenüber der abgestrahlten Energie (Eout) in Abhängigkeit der Tiefe d aufzeigen. Die Grenze zwischen dem trockenen 23 und dem feuchten Bereich 24 ist mit einer Linie 26 eingezeichnet. Dringt die Wellenkeule der Mikrowellenstrahlung in den feuchten Bereich ein, so wird viel Energie absorbiert und weniger reflektiert. Vorzugsweise nach einer Kalibrierung des Systems durch Messung an einer vollständig trockenen Bodenschicht, kann die reflektierte Energie einer mittleren Messtiefe zugeordnet werden.

In der Praxis sind Bodenschichten nicht scharf getrennt und Kurvenverläufe entsprechend weniger gestuft. Trotzdem kann beispielsweise durch Festlegen von Grenzwerten, wie beispielsweise Eout/Eref - Verhältnisgrenzwert, Bereiche mit höherem Wasserbedarf von solchen mit niedrigerem Wasserbedarf klar unterschieden werden.

Ist der Boden bewachsen, z.B. mit Rasen, so wirkt sich die im Boden vorhandene wasserhaltige Wurzelmasse auf die Messkurve wie folgt aus: Die Wurzeln und der sie umgebende Boden erscheinen im Mittel feuchter als ohne Wurzeln, d.h. die Kurve folgt einem Verlauf, wie in Fig. 1b, in Kurve 28 schematisch gezeigt. Da die Wurzeln Wasser aus dem Boden aufnehmen und der Pflanze zuführen, kommt es in einer bestimmten Bodentiefe zu einem Feuchteminimum. Dieses Minimum kann auch messtechnisch erfasst und zur Steuerung der Bewässerung verwendet werden.

Ist der Boden relativ trocken, so enthalten auch die Wurzeln weniger Wasser und die Veränderung der Kurve ist weniger ausgeprägt.

In **Figur 2a** ist eine Anordnung einer Mikrowellenquelle 30 und eines Mikrowellendetektors 31 gezeigt, welche zusammen den Sensor bilden. Quelle und Detektor sind dabei in einem Winkel von ca. 25-50° zur Senkrechten angeordnet. Die von der Quelle abgestrahlte Energie, welche mittels gestrichelter Kurven 25 eingezeichnet ist, wird teilweise reflektiert (durch Kurven 32 eingezeichnet) und durch den Mikrowellendetektor gemessen. Mit einer solchen Anordnung sind sehr genaue Tiefenprofile zu erhalten, da reflektierte Wellen aus unterschiedlichen Tiefen detektiert werden können.

Solche Mikrowellenmessungen sind in sehr kurzer Zeit durchführbar. Sie können kontinuierlich vorgenommen werden, da ein zu messender Boden nicht berührt werden muss.

Um quantitative Messwerte zu erhalten, wird vorzugsweise eine Kalibrierung für einen bestimmten Bodentyp vorgenommen. Dabei kann ein Bereich des Bodens in der Grösse von beispielsweise ca. einem Quadratmeter von jeglicher Bewässerung ausgeschlossen, d.h. trocken gehalten, werden. Misst man an dieser Stelle so wird die Basislinie für den trockenen Boden bestimmt. Jeder davon abweichender Wert ist auf den Einfluss der Bodenfeuchte zurückzuführen.

In **Figur 2b** sind schematisch mehrere Mikrowellsen-Sensoren 39,39',39'',39''' mit unterschiedlich ausgeprägten Wellenkeulen gezeigt. Die Sensoren vermögen entsprechend unterschiedlicher Abstrahlleistungen in unterschiedlichen Tiefenbereichen des Bodens 40,40',40",40"'zu messen.

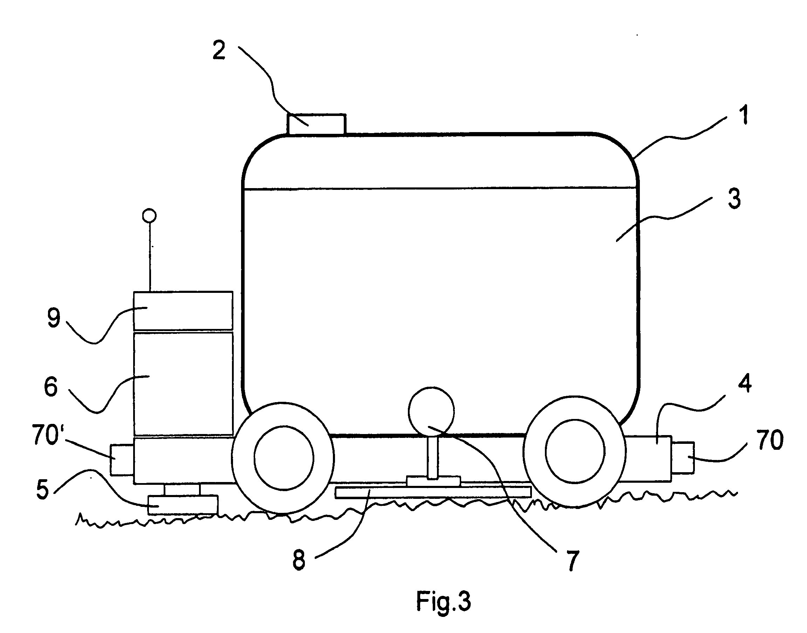

In **Figur 3** ist auf einem fahrbaren Wagen 4 ein mit Wasser 3 gefüllter Tank 1 mit einem Einfüllstutzen 2, befestigt. Ein oder mehrere Mikrowellen-Sensoren 5 zum kontaktlosen Messen der Feuchte des Bodens, sind am Bug des Gefährts in geringem Abstand zur Bodenoberfläche angebracht. Typische Abstandsbereiche sind 0 bis 10cm, vorzugsweise 0.5 bis 5cm, z.B. 1.5 bis 3cm. Eine elektronische Steuereinrichtung 6 steuert den Sensor und ein Bewässerungssystem 8. Bei Unterschreiten eines vorzugsweise vorab einstellbaren Feuchte-Grenzwertes, wird eine Pumpe 7 durch die Steuereinrichtung, vorzugsweise eine vorgegebene Zeitspanne lang, aktiviert und damit Wasser über das Bewässerungssystem 8 auf die Bodenfläche verteilt. Das Bewässerungssystem ist in dieser Figur unten am Wagen in Bodennähe montiert. Damit ist eine sehr gezielte, und lokale Bewässerung möglich. Um eine Bewässerung grossflächiger zu gestalten, ist es auch möglich, eine Sprinkervorrichtung in einem oberen Teil des Wagens oder auf dem Tank zu montieren.

Der Wagen weist vorne und hinten je einen Hindemissensor 70,70' auf, mit welchem Kollisionen mit Hindernissen verhindert werden sollen. Diese Hindernissensoren können Abstandssensoren bekannter Art und auch an den Ecken oder Seiten des Wagens angebracht sein.

Eine Feuchtemessung kann je nach Bedarf kontinuierlich oder auch diskontinuierlich durchgeführt werden.

Optional steuert ein Navigationssystem 9 den Wagen selbständig innerhalb eines vorgegebenen Bereiches so, dass der Bereich vorzugsweise vollständig abgefahren wird. Beispielsweise aus dem Bereich des mobilen Rasenmähers sind Geräte bekannt, welche sich innerhalb eines festgelegten Bereichs beliebig bewegen und im wesentlichen nur bei Hindernissen oder Grenzen ihre Richtung ändern.

Die Geschwindigkeit des Wagens kann vorzugsweise abhängig vom Wassergehalt der Bodenfläche gesteuert werden. Benötigt der Boden kein Wasser wird rascher gefahren, wird Wassermangel detektiert wird langsamer gefahren, um genügend Zeit zur Bewässerung zu haben.

Bei Verwendung eines GPS-Systems kann bei einem vorgegeben Flächenbereich auch der lokale Wasserbedarf fortlaufend gemessen und die Messwerte in einer Landkarte eingetragen werden. Dies erlaubt die Bestimmung von kritischen Flächen, die beispielsweise einer besonders intensiven Bewässerung bedürfen. Ja nachdem kann eine Flächenbepflanzung und ein entsprechender Wasserbedarf auch bereits vorgängig in einer entsprechenden Elektronik gespeichert sein.

Die Grösse des Wassertanks 1 kann dem Verwendungszweck der Bewässerungsvorrichtung angepasst werden. Dadurch, dass bedarfsgerecht und damit sehr sparsam bewässert wird, kann auf die ansonsten üblichen grossen Wassermengen verzichtet werden. Im Tank kann zusätzlich eine Anzeige, z.B. ein Füllstandssensor, angebracht sein, um einen Nachfüllbedarf des Tanks anzuzeigen oder gegebenenfalls zu steuern.

Wird die Vorrichtung zudem mit einer Hochdruckbewässerung und/oder einer Bewässerung mittels Injektionsspitzen kombiniert, kann zusätzlich Wasser eingespart werden, da dieses noch gezielter genau dort hingebracht wird, wo es benötigt wird und nicht unnötig verdunstet.

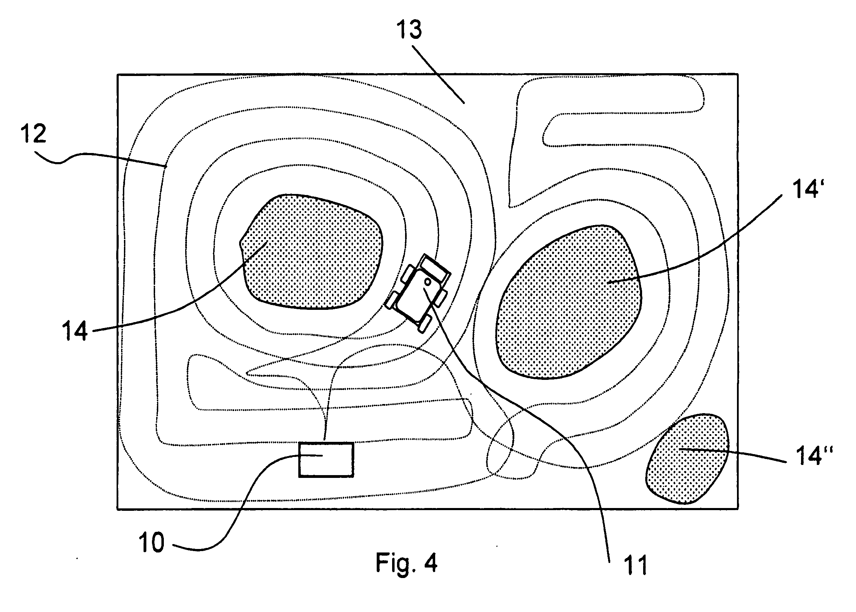

**Figur 4** zeigt beispielhaft eine zu bewässernde rechteckige Fläche 13 mit drei Sperrzonen 14,14',14" und einer Dockingstation 10. Ein Bewässerungswagen 11, beispielsweise gemäss Figur 3, fährt entlang eines vorgegebenen oder auch selbst definierten Pfades 12 die Fläche 13 so ab, dass möglichst alle Bereiche überdeckt werden.

Dabei kann die Fläche wie aus mobilen Rasenmähern bekannt, zufällig abgefahren werden (selbstbestimmter Pfad). Eine maximal abzufahrende Fläche wird dann beispielsweise durch einen verlegten Draht begrenzt oder ist beispielsweise als Karte gespeichert. Solche Daten können in der Elektronik im Wagen selber, aber beispielsweise auch in einer Nachladestation vorhanden sein. Die Kommunikation zwischen Dockingstation 10 und Bewässerungswagen geschieht auf bekannte Art, z.B. mittels Funk, Infrarot, GPS, etc.

Es ist auch möglich, insbesondere bei weitläufigen zu bewässernden Flächen, mehrere Dockingstationen zu haben. Dabei wird vorzugsweise die Nähere zum Nachladen angefahren.

Dockingstationen können auch als Hydranten ausgestaltet sein, wie beispielsweise für das mobile Bewässerungssystem gemäss EP1849354 beschrieben. Entsprechend kann ein Bewässerungswagen auch ohne Tank ausgestaltet und entlang vorgegebenen Bahnen (vorgegebener Pfad) geführt werden.

Um ein unnötiges Starten des Bewässerungswagens zu vermeiden, können stationäre Sensoren an exponierten Positionen eingesetzt werden, die erst dann eine Bewässerungsaktion freigeben, wenn die Bodenfeuchte unter einen kritischen Wert abgesunken ist.

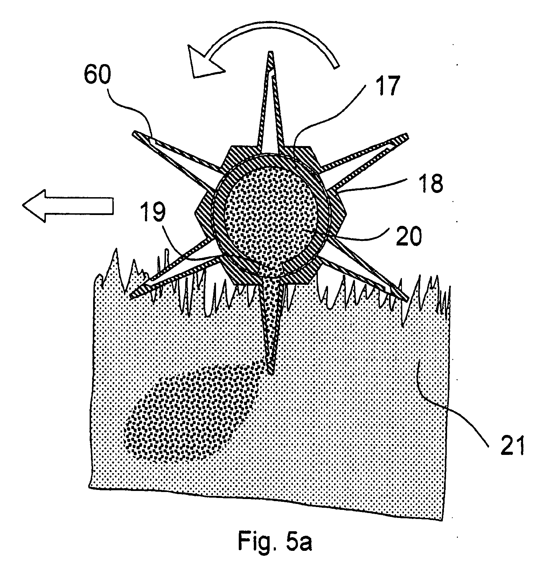

In **Figur 5a** ist das Prinzip zum Einbringen von Wasser mittels Injektionsspitzen in einer seitlichen Schnittansicht schematisch dargestellt. Dabei dreht sich ein mit mehreren Injektionsspitzen 60, 60' oder -düsen besetztes Rad 18 auf einer hohlen Achse17. Diese Achse weist im unteren Bereich einen oder mehrere Schlitze 19 auf. Das Wasser 20 wird nun über die hohle Achse zugeführt und wird immer dann wenn sich eine Injektionsspitze 60,60',60" im Bereich des Schlitzes 19 befindet in den Boden 21 austreten. Die sich nicht im Bereich der Schlitze befindlichen Spitzen sind vorzugsweise gegenüber der Hohlachse abgedichtet und können kein Wasser verspritzen.

Die Spitzen weisen eine bevorzugte Länge von 2 bis 15 cm, beispielsweise 10 cm auf und dringen typischerweise 1 bis 10 cm, vorzugsweise zwischen 2 und 8 cm, z.B. 3-5cm in den Boden ein. Dadurch kann der Wasserdruck wesentlich niedriger ausfallen, als wenn der obere, mit Wurzeln durchsetzte Bodenbereich, vom Wasserstrahl durchdrungen werden müsste. Auch kann durch eine optimierte Anordnung der Injektionsspitzen eine optimale Wasserverteilung im Boden erzielt werden.

Die Austrittsöffnungen der Injektionsspitzen sind vorzugsweise in einem äussersten Bereich der Spitzen, jedoch der Bewegungsrichtung der Spitzen abgewandten Seite angeordnet. Damit kann verhindert werden, dass Erde beim Eindringen der Spitzen in den Boden auch in die Injektionsöffnungen gelangt. Zudem dient das mit Hochdruck in die Injektionsspitzen gepresste Wasser gleichzeitig zu deren Säuberung.

Wie in der Figur 5a gezeigt, sind sechs Injektionsspitzen regelmässig im Winkel von 60° über den Umfang des Rads angeordnet. Es ist auch möglich mehr oder weniger Spitzen anzuordnen, beispielsweise eine einzelne bzw. eine einzelne Reihe von Spitzen.

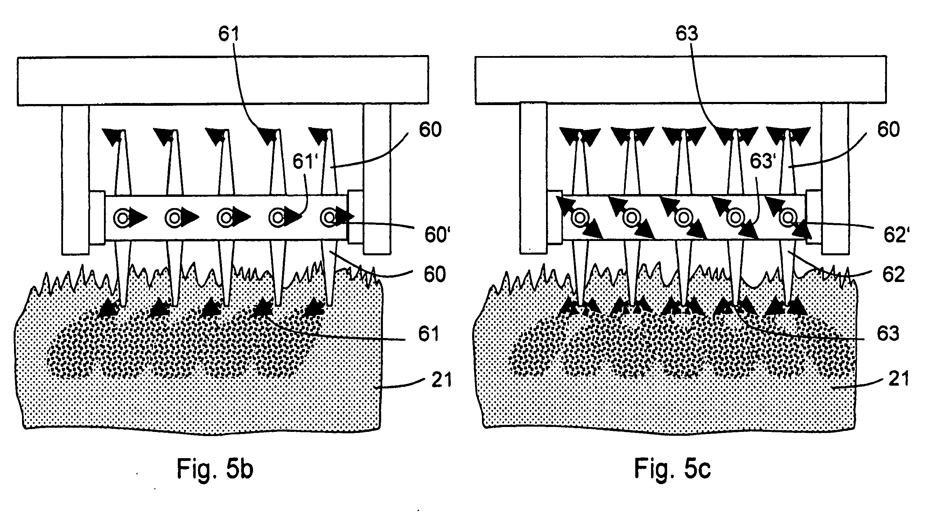

Eine Frontansicht einer Anordnung von Düsen ist in **Figur 5b** dargestellt. Dabei sind der Deutlichkeit halber nur vier, um 90° zueinander angeordnete Spitzen eingezeichnet, wobei jeweils 5 solcher Einzelanordnungen nebeneinander angeordnet sind. Werden die Austrittsöffnungen an den Injektionsspitzen 60,60' alternierend in im wesentlichen ihrer Gegenrichtung angeordnet- wie durch Pfeile 61, 61' angedeutet,- so kann eine sehr homogene Wasserverteilung im Boden erzielt werden.

Eine weitere Ausführungsform ist in **Figur 5c** dargestellt. Dabei wird jede Spitze 62,62' mit zwei Austrittsöffnungen, die um ca. 45° gegenüber der Achse verdreht sind, ausgestattet, um eine noch homogenere Wasserverteilung zu erzielen. Eine Austrittsrichtung von Wasser aus den Injektionsspitzen 62,62' ist wiederum mit Pfeilen 63,63' eingezeichnet.

Das Eindringen der schlanken Spitzen in den Boden geschieht während der Vorwärtsbewegung des Rades, welches vorzugsweise an einem Wasser tragenden Wagen angebracht ist. Die Drehung der Spitzenwalze bedarf damit keines zusätzlichen Antriebs. Der Boden und auch die Bepflanzung werden nicht geschädigt, wobei die Spitzen kleine Löcher erzeugen, welche die Belüftung des Bodens und auch das Eindringen von Regenwasser verbessern.

Bei sehr empfindlichen Rasenstücken, wie z.B. dem Green auf Golfplätzen können, wenn erforderlich, Spitzenwalzen mit sehr dünnen und kurzen Spitzen eingesetzt werden.

Bevorzugte Spitzendurchmesser liegen im Bereich von 1 und 5 mm, z.B. 2-4mm, während bevorzugte Düsen- bzw. Spitzenöffnungen zwischen 0.5 und 4mm, z.B. 1-3mm betragen.

Die Verdunstung des an der Oberfläche verbleibenden Wassers wird dank dieser Methode praktisch auf Null reduziert. Zudem wird die für eine sichere Versorgung der Wurzeln notwendige Menge Wasser direkt zu den Wurzelbereichen geführt und ebenfalls reduziert.

## Patentansprüche

1. Mobile Vorrichtung zur bedarfsgerechten Bewässerung eines Bodens (21) mit einer Bewässerungseinheit (8) zum Bewässern des Bodens und mit einer Messeinheit zur Bestimmung des Wassergehalts des Bodens entlang eines Messpfads, wobei mittels einer Steuereinheit (6), entsprechend dem gemessenen Wassergehalt der Boden entlang des Messpfads bewässert wird, **dadurch gekennzeichnet, dass** die Messeinheit eine mobile Mikrowellen-Messeinheit ist.

2. Vorrichtung nach Anspruch 1, **dadurch gekennzeichnet, dass** die mobile Mikrowellen-Messeinheit mindestens eine Mikrowellenquelle und ein von der Mikrowellenquelle beabstandet angebrachten Mikrowellendetektor beinhaltet.

3. Vorrichtung nach einem der Ansprüche 1-2, weiter aufweisend einen Wassertank (1).

4. Vorrichtung nach einem der vorhergehenden Ansprüche, **gekennzeichnet durch** eine Hochdruckeinrichtung zur druckbeaufschlagten Abgabe mindestens eines Wasserstrahls in Richtung Boden.

5. Vorrichtung nach Anspruch 4, wobei eine Wasserabgabe durch mindestens eine Injektionsspitze (60,60') mit einem Spitzendurchmesser von 1 bis 5 mm erfolgt.

6. Vorrichtung nach einem der vorhergehenden Ansprüche, wobei eine Wasserabgabe durch Injektionsspitzen (60,60') erfolgt, und wobei mehrere Injektionsspitzen in regelmässigem Abstand über dem Umfang eines Rohres angebracht sind und wobei die Injektionsspitzen Auslassöffnungen aufweisen, welche zu einer Längsachse der Injektionsspitzen einen Winkel aufweisen.

7. Vorrichtung nach einem der vorhergehenden Ansprüche, mit einem Farbsensor zur Feststellung einer begrünten oder nackten Bodenfläche.

8. Verfahren zur bedarfsgerechten Bewässerung eines Bodens (21), **gekennzeichnet durch** eine mobile Bestimmung des Wassergehalts eines Bodens entlang eines Messpfads mittels Mikrowellenstrahlung und Bewässern eines Bereichs des Bodens entsprechend dem gemessenen Wassergehalt des Bodens entlang des Messpfads.

9. Verfahren nach Anspruch 8, wobei der abgefahrene Pfad vorgegeben oder selbstbestimmt ist, derart, dass alle Bereiche eines Bodens (21) bedarfsgerecht bewässert werden.

10. Verfahren nach Anspruch 8 oder 9, wobei zur Bestimmung des Wassergehalts des Bodens durch Absorptionsmessung und Reflexionsmessung von Mikrowellen ein Tiefenprofil des Wassergehalts des Bodens bestimmt wird.

11. Verfahren nach einem der Ansprüche 8-10, wobei in einem mobilen Wassertank (1) mitgeführtes Wasser (3) zu Bewässerung verwendet wird und wobei bei einem Erreichen oder Unterschreiten einer Mindestwassermenge im Wassertank oder einer Mindestenergiemenge der mobilen Messvorrichtung, automatisch eine entsprechend eingerichtete Dockingstation (10) angefahren wird zum Nachladen von Wasser und/oder Energie.

12. Verfahren nach einem der Ansprüche 8-11, wobei mit mindestens einem zum Boden (21) hin gerichteten Wasserstrahl bewässert wird.

13. Verfahren nach Anspruch 12, wobei der mindestens eine Wasserstrahl mit Hochdruck in einem Druckbereich von 2 bis 40 bar gegen den Boden (21) gerichtet wird.

14. Verfahren nach Anspruch 12 oder 13, wobei der mindestens eine Wasserstrahl über eine zumindest teilweise in den Boden (21) eingebrachte Injektionsspitze (60,60') direkt in den Boden eingebracht wird.

## Claims

1. A mobile apparatus for irrigating soil (21) according to requirements, with an irrigation unit (8) for irrigating the soil, and with a measuring unit for determining the water content of the soil along a measuring path, wherein the soil is irrigated, by means of a control unit (6), in accordance with the measured water content along the measuring path, **characterized in that** the measuring unit is a mobile microwave measuring unit.

2. The apparatus as claimed in claim 1, **characterized in that** the mobile microwave measuring unit comprises at least one microwave source and a microwave detector provided at a distance from the microwave source.

3. The apparatus as claimed in one of claims 1-2, further comprising a water tank (1).

4. The apparatus as claimed in one of the preceding claims, **characterized by** a high-pressure device for the pressurized delivery of at least one water jet in the direction of the ground.

5. The apparatus as claimed in claim 4, wherein water is delivered through at least one injector (60, 60') with an injector diameter of 1 to 5 mm.

6. The apparatus as claimed in one of the preceding claims, wherein water is delivered through injectors (60, 60'), and a number of injectors are provided at regular intervals over the circumference of a pipe and the injectors comprise outlet openings which are at an angle to a longitudinal axis of the injectors.

7. The apparatus as claimed in one of the preceding claims, with a color sensor for establishing a grassy or bare area of ground.

8. A method for irrigating soil (21) according to requirements, **characterized by** a mobile determination of the water content of soil along a measuring path by means of microwave radiation and irrigating a region of the ground in accordance with the measured water content of the soil along the measuring path.

9. The method as claimed in claim 8, wherein the path traveled along is predetermined or self-determined in such a way that all the regions of ground (21) are irrigated according to requirements.

10. The method as claimed in claim 8 and 9, wherein, to determine the water content of the soil, a depth profile of the water content of the soil is determined by absorption measurement and reflection measurement of microwaves.

11. The method as claimed in one of claims 8-10, wherein water (3) carried along in a mobile water tank (1) is used for irrigation and, when the water in the water tank or the energy in the mobile measuring device reaches or goes below a minimum amount, a correspondingly set-up docking station (10) is automatically traveled to for recharging with water and/or energy.

12. The method as claimed in one of claims 8-11, wherein irrigation is performed with at least one water jet directed toward the ground (21).

13. The method as claimed in claim 12, wherein the at least one water jet is directed toward the ground (21) under high pressure in a pressure range from 2 to 40 bar.

14. The method as claimed in claim 12 or 13, wherein the at least one water jet is introduced directly into the soil by means of an injector (60, 60') at least partially inserted in the ground (21).

## Revendications

1. Dispositif mobile pour l'arrosage d'un sol (21) en fonction de ses besoins, présentant
une unité d'arrosage (8) pour arroser le sol et
une unité de mesure pour déterminer la teneur en eau du sol le long d'un parcours de mesure,
le sol étant arrosé au moyen d'une unité de commande (6) le long du parcours de mesure en fonction de la teneur en eau mesurée,
**caractérisé en ce que**
l'unité de mesure est une unité mobile de mesure par microondes.

2. Dispositif selon la revendication 1, **caractérisé en ce que** l'unité mobile de mesure par microondes contient au moins une source de microondes et un détecteur de microondes placé à distance de la source de microondes.

3. Dispositif selon l'une des revendications 1 et 2, présentant en outre une cuve (1) à eau.

4. Dispositif selon l'une des revendications précédentes, **caractérisé par** un dispositif à haute pression qui délivre au moins un jet d'eau sous haute pression en direction du sol.

5. Dispositif selon la revendication 4, dans lequel l'eau est délivrée par au moins une pointe d'injection (60, 60') dont le diamètre est compris entre 1 et 5 mm.

6. Dispositif selon l'une des revendications précédentes, dans lequel l'eau est délivrée par des pointes d'injection (60, 60'), plusieurs pointes d'injection étant installées à intervalles réguliers à la périphérie d'un tube et les pointes d'injection présentant des ouvertures de sortie qui forment un angle par rapport à l'axe longitudinal des pointes d'injection.

7. Dispositif selon l'une des revendications précédentes, présentant un capteur de couleur pour constater si la surface du sol est verte ou mouillée.

8. Procédé pour arroser un sol (21) en fonction de ses besoins, **caractérisé par** la détermination mobile de la teneur en eau du sol le long d'un parcours de mesure au moyen d'un rayonnement à microondes et par l'arrosage d'une partie du sol en fonction de la teneur en eau qui a été mesurée dans le sol le long du parcours de mesure.

9. Procédé selon la revendication 8, dans lequel le chemin parcouru est prédéterminé ou auto-déterminé de telle sorte que toutes les parties d'un sol (21) soient arrosées en fonction de leurs besoins.

10. Procédé selon la revendication 8 ou 9, dans lequel pour déterminer la teneur en eau du sol, un profil de profondeur de la teneur en eau du sol est déterminé par mesure d'absorption et mesure de réflexion de microondes.

11. Procédé selon l'une des revendications 8 à 10, dans lequel de l'eau (3) emportée dans une cuve (1) mobile à eau est utilisée pour l'arrosage, un poste d'arrimage (10) conçu de manière appropriée étant abordé automatiquement pour recharger de l'eau et/ou de l'énergie au cas où une quantité minimale d'eau est atteinte ou n'est plus atteinte dans la cuve à eau ou qu'une quantité minimale d'énergie est atteinte ou n'est plus atteinte dans le dispositif mobile de mesure.

12. Procédé selon l'une des revendications 8 à 11, qui arrose par au moins un jet d'eau orienté en direction du sol (21).

13. Procédé selon la revendication 12, dans lequel au moins un jet d'eau est orienté vers le sol (21) sous une haute pression comprise dans une plage de 2 à 40 bars.

14. Procédé selon les revendications 12 ou 13, dans lequel le jet d'eau est apporté directement dans le sol par une pointe d'injection (60, 60') placée au moins en partie dans le sol (21).
